# EUROPEAN PATENT APPLICATION

(11) **EP 1 321 045 A1**
(43) Date of publication of application: **25.06.2003**
(21) Application number: 02425646.3
(22) Date of filing: 25.10.2002
(51) Int. Cl.: A23L 1/31, A23L 1/05, A23L 1/39

(54) **Process and product based on fresh meat combined with a solidified sauce, for preparing a gastronomic speciality**

(30) Priority: 18.12.2001 IT MO20010252
(71) Applicant: Italia Salumi S.p.A., 41100 Modena (IT)
(72) Inventor: Pierro, Damiano, 41100 Modena (IT)
(74) Representative: Gotra, Stefano

(57) **Abstract**

The products of the invention are obtained as follows: the process includes a fresh meat-cutting stage, a preparation stage of a sauce with predetermined ingredients, a stage of solidification of the sauce, obtained using thickening or gelling agents which are extraneous to the products included in the recipe; a batching stage of the solidified sauce in desired shapes and sizes, a combining stage, carried out in a packaging stage, of pieces of meat and solidified portions of sauce. The process produces a solid sauce which is insoluble in water and which can be returned to a liquid state by application thereto of heat; and provides a gastronomic speciality comprising fresh cut meat in pieces and all the ingredients necessary for culinary preparation thereof.

## Description

The gastronomic field has already for some time offered speciality foods, constituted by various basic elements, which have been mixed and cooked using various processes, and offer the consumer a meal which can be rapidly prepared and eaten.

These foods, sometimes known as ready meals, can be eaten directly or in some cases require heating or partial cooking. These products already contain all of the ingredients, premixed, and appear on the market as packaged meals, possibly fully ready for consumption, or needing only reheating or partial cooking, or marinated products (having a precise and distinctive flavour), or vacuum-packed products, or dried products, needing reconstitution with water and subsequent heating-up or at least partial cooking. If there is meat in these prepared foods, it is pre-cooked.

The speciality foods exhibit undoubted advantages, i.e. long shelf lives and extreme rapidity and ease of preparation by the consumer. In some regions of the world, however, for example Italy, these products are not always met with approval, as the consumers in those regions want to buy fresh meat and not preserved or pre-cooked meat.

The invention relates to fresh meat. The prior art teaches these products, generally contained in non-toxic plastic trays and sealed using transparent plastic film. The meat is cut into pieces, such as sliced steak, chopped meats for stews etc., larger pieces or joints for roasts, and so on, and may include garnishing, such as green vegetables, herbs, pickles and spices). The product may also be made of fresh minced meat with herbs added (for example hamburgers, or perhaps meat sauces, for pasta for example, which include meat with additions of salt and spices).

The market for these products, obviously different to the previously-mentioned market for ready-made meals, is specifically the fresh meat market - indeed these products are typically and exclusively found in butchers' shops or supermarket fresh meat departments. These products are particularly popular with consumers who wish to use fresh meats both due to personal preference and because they prefer to see and choose what they are buying. The problem is that when buying fresh meat the customer then has to buy the other ingredients needed, especially for preparation of quite specialist or complex dishes. Naturally, the same customer will have to set aside more time for preparation of the recipe at home - and it goes without saying that the individual has to have the necessary culinary skills to make the desired dish.

The ready-made market already includes packages, usually sachets made of non-toxic food use materials, which contain pre-prepared sauces which can be added to fresh meat during the cooking process. This also requires a further buying and choosing operation after the initial meat-buying stage, and not always can the right sachet or ingredient be readily located. In any case, these products are not included in the typology in question, i.e. that relating to "pre-prepared gastronomic specialities" to which the present invention relates. This is because the above products do not deal with complete one-off recipes, but only with complex ingredients to be used together with other elements, all to be chosen separately.

The main aim of the present invention is to provide a process for pre-preparation of fresh meat-based gastronomic specialities, and to provide new products produced using the process, thus overcoming the drawbacks and lacks in the prior art.

An advantage of the process, and the products, is that it enables a combination of the various characteristics that please the prospective consumer, i.e. the ability to see and choose the fresh meats on display, with the convenience and rapidity of buying the necessary ingredients for a gastronomic speciality all in one.

These aims and advantages and others besides are all attained by the invention as it is characterised in the appended claims.

Further characteristics and advantages of the present invention will better emerge from the detailed description that follows of the various stages of the process and the products obtained there-with.

The process, which relates to the preparation of pre-prepared fresh meat-based gastronomic specialities, first comprises a fresh meat cutting stage, cutting the meats to the desired sizes. The meat can be of any type (beef, pork, horse, poultry etc) is cut or chopped into pieces of various sizes, according to the gastronomic speciality to be created.

Ornamental or aromatic ingredients can be added to the cut or chopped meat; the ingredients can be specific to the gastronomic speciality being prepared, or can be those garnishings often used in the gastronomic field to improve the aesthetic appeal of the foods on offer. Typically, green vegetable foodstuffs, or pickles or spices are used at this stage.

A sauce preparation stage is included in the process, not in any particular order, the ingredients of which depend on the recipe for the dish under preparation. The sauces, which can obviously be of any kind, are prepared in the traditional ways, following the equally traditional recipes. They might be mushroom sauces, or tomato-and-herbs, or green peppers, mustard and so on. When ready, the sauce typically has a dense or creamy liquid appearance which may or may not include small pieces of various ingredients. At this stage the sauce is solidified using thickening or gelling agents, of known type, which are extraneous to the recipe of the sauce. These thickeners or gelling agents must in no way affect the taste of the sauce, nor must they have any other aim than to cause a solidification of the sauce itself at normal room temperature; they must however render the sauce impervious to re-liquefaction by addition of water, only being returnable to the liquid state by application of heat.

Products which might be used are, for example, starches, animal-based gelatins, pectins, agar-agar and the like.

The solidified sauce is then batched into desired portions which may be specially shaped.

Preferably the portions of sauce obtained will be of various shapes, not affecting their taste but making them more appealing, and possibly even symbolising in some way the main ingredients thereof. For example, a tomato, onion, carrot, or sea food sauce might be in the shape of a tomato, an onion, a carrot, a fish or a crustacean, if not literally then symbolically. Fantasy shapes might also be used, such as a chef's hat, stars, the moon, a heart and so on.

The sauces, solidified by addition of the above-mentioned agents, and batched into predetermined shapes and sizes, are finally packaged together with the pieces of fresh meat as previously described, and to the other aromatic or ornamental ingredients. The packaging generally consists of non-toxic plastic trays, covered over by a transparent plastic film, already typically used for fresh meats and for fresh products in general.

Thus the public is offered fresh meat in a container including a pre-prepared gastronomic speciality, which not only comprises fresh meat pieces, clearly visible inside the container, but also ornamental and aromatic foodstuffs and a sauce, already prepared with known ingredients according to the particular gastronomic speciality desired. The sauce is visibly displayed on the meat, and is in solid form and presented in various shapes and sizes.

Of crucial importance is that the sauce should not be water-soluble. This is because the solid-state sauce is in contact with the fresh meat, which inevitably contains dampness or liquids, and any liquefaction of the sauce would have disastrous aesthetic effects on the package as a whole.

Also worthy of note is the fact that the sauces will need no addition of preservatives in that the shelf-life of the sauce is in any case considerably-longer than that of the fresh meats it is sold with.

A final point to remember is that the sauces of the invention are not simply condiments, i.e. substantially constituted by one ingredient only, but are made from precise recipes, more or less complex, and constitute in themselves a culinary speciality.

The package thus prepared contains everything needed for the preparation of the speciality. Thus it will be sufficient to cook the meat and melt the sauce in order to have a gastronomic speciality.

## Claims

1. A process for preparing fresh meat-based pre-prepared gastronomic specialities, comprising a stage of cutting the fresh meat into pieces of a desired size, and a final stage of packing the fresh meat in containers of known type, used for packing fresh meat, **characterised in that** it comprises:
a preparation stage of a sauce, ingredients of which depend on a recipe for a gastronomic speciality;
a stage of solidification of the sauce, obtained by adding a thickening or gelling product of known type, not included in the recipe and not modifying in any way a taste of the sauce;
a stage of batching the sauce when solid to obtain portions of sauce in desired dimensions and shapes;
a stage of combining, in a final packaging stage, the pieces of meat and the portions of solidified sauce.

2. The process of claim 1, **characterised in that** the solidifying stage of the sauce includes use of products of known type to produce a sauce in a solidified form, not soluble in water and returnable to a liquid form by means of application of heat thereto.

3. The process of claim 1, **characterised in** the solidifying stage of the sauce is obtained by use of starches, animal gelatins, pectins, agar-agar and similar substances.

4. The process of claim 1, **characterised in that** the final packaging stage includes a stage of adding ornamental or aromatic food products.

5. Pre-prepared fresh meat-based gastronomic specialities comprising, in combination with pieces of meat, a sauce, previously prepared with known-type ingredients depending on a recipe of the gastronomic speciality being prepared, which sauce is visibly arranged on the fresh meat and is in a solidified form.

6. The specialities of claim 5, **characterised in that** it comprises ornamental or aromatic food products which are arranged visibly on the meat.

7. A sauce for fresh meat-based pre-prepared gastronomic specialities made according to recipes of the gastronomic specialities **characterised in that** it comprises thickening or gelling substances of known type which are extraneous to the recipes and which do not influence a taste thereof, and which bring the sauce to a solid state which solid state is not soluble in water and which can be returned to a liquid state by application of heat.

8. The sauce of claim 7, **characterised in that** it is combined, for sale thereof, with fresh meat cut into pieces of predetermined shape and size.
